# EUROPÄISCHE PATENTSCHRIFT

(11) **EP 1 101 163 B1**
(45) Veröffentlichungstag und Bekanntmachung des Hinweises auf die Patenterteilung: **05.06.2002**
(21) Anmeldenummer: 99952242.8
(22) Anmeldetag: 02.08.1999
(51) Int. Cl.: G06F 11/00

(54) **PROGRAMMGESTEUERTE EINHEIT**
PROGRAM-CONTROLLED UNIT
UNITE COMMANDEE PAR PROGRAMME

(30) Priorität: 06.08.1998 DE 19835609
(43) Veröffentlichungstag der Anmeldung: 23.05.2001
(73) Patentinhaber: Infineon Technologies AG, 81669 München (DE)
(72) Erfinder: MAYER, Albrecht, D-82041 Deisenhofen (DE)
(74) Vertreter: Jannig, Peter, Dipl.-Ing.
(86) Internationale Anmeldenummer: DE9902365
(87) Internationale Veröffentlichungsnummer: WO0008558

(56) Entgegenhaltungen:
- WO-A-98/07091
- US-A- 5 758 059

## Beschreibung

Die vorliegende Erfindung betrifft eine Vorrichtung gemäß dem Oberbegriff des Patentanspruchs 1, d.h. eine programmgesteuerte Einheit mit einem OCDS-Modul.

Die in Rede stehenden programmgesteuerten Einheiten sind beispielsweise Mikroprozessoren, Mikrocontroller und dergleichen; sie sind seit vielen Jahren in den unterschiedlichsten Ausführungsformen bekannt und bedürfen keiner näheren Erläuterung.

Die besagten OCDS-Module sind die sogenannten On-Chip-Debug-Support-Module, die mittlerweile in fast allen neueren programmgesteuerten Einheiten integriert werden. Über derartige Einrichtungen können externe Debugger während des "normalen" Betriebes der betreffenden programmgesteuerten Einheiten in mannigfaltiger Weise auf diese zugreifen und Einfluß nehmen; dies wird derzeit vor allem dahingehend ausgenutzt, daß die betreffenden programmgesteuerten Einheiten beim Erreichen vorgebbarer Break-Bedingungen automatisch angehalten werden und/oder daß gezielte Lese- und/oder Schreibzugriffe auf die internen und externen Register, Speicher und/oder andere Komponenten der betreffenden programmgesteuerten Einheiten und/oder der diese enthaltenden Systeme durchgeführt werden.

Die besagten externen Debugger sind seit langem und in einer großen Vielzahl von Ausführungsformen bekannte Einrichtungen für die Suche nach vorhandenen Software- und/oder Hardwarefehlern in den betreffenden programmgesteuerten Einheiten oder den diese enthaltenden Systemen.

Durch die OCDS-Module werden die (relativ einfach aufgebauten) externen Debugger zu sehr mächtigen Werkzeugen, durch welche selbst sehr kompliziert aufgebaute und/oder sehr schnell arbeitende programmgesteuerte Einheiten effizient und umfassend überwacht und überprüft werden können.

Allerdings eröffnen die OCDS-Module auch die Möglichkeit, aus Sicherheits- und/oder Wettbewerbsgründen geheim zu haltende Daten oder Programme durch Lese- und/oder Schreibzugriffe der OCDS-Module auf interne und/oder externe Register, Speicher oder sonstige über die OCDS-Module ansprechbare Komponenten zu erfahren oder zu manipulieren. Dies ist verständlicherweise unerwünscht.

Der vorliegenden Erfindung liegt daher die Aufgabe zugrunde, die programmgesteuerte Einheit gemäß dem Oberbegriff des Patentanspruchs 1 derart weiterzubilden, daß bei weiterhin hohem Leistungsumfang des OCDS-Moduls die Gefahr eines Mißbrauchs desselben auf ein Minimum reduzierbar ist.

Diese Aufgabe wird erfindungsgemäß durch das im kennzeichnenden Teil des Patentanspruchs 1 beanspruchte Merkmal gelöst.

Demnach ist vorgesehen, daß die programmgesteuerte Einheit eine Zugriffsberechtigungs-Kontrolleinrichtung aufweist, durch welche dafür gesorgt wird, daß dem OCDS-Modul abverlangte Lese- und Schreibzugriffe auf interne und/oder externe Register, Speicher und/oder sonstige über das OCDS-Modul ansprechbare Komponenten nur ausgeführt werden, wenn die die betreffenden Zugriffe verlangende Einrichtung die Berechtigung hierfür nachgewiesen hat.

Ob das OCDS-Modul von ihm abverlangte (sicherheitskritische) Lese- und Schreibzugriffe auf interne und/oder externe Register, Speicher und/oder sonstige über das OCDS-Modul ansprechbare Komponenten ausführt, wird also von der diese Zugriffe anfordernden Einrichtung abhängig gemacht. Nur wenn diese nachweisen kann, daß sie zur Anforderung derartiger zugriffe berechtigt ist, werden die angeforderten Zugriffe tatsächlich ausgeführt; in allen anderen Fällen wird die Ausführung derartiger Zugriffe verweigert.

Weil die Einzelheiten des erforderlichen Berechtigungsnachweises nur dem Hersteller der programmgesteuerten Einheit oder des die programmgesteuerte Einheit enthaltenden Systems bekannt sind, kann dieser festlegen, ob und gegebenenfalls wer durch die Mitteilung der Einzelheiten des Berechtigungsnachweises in die Lage versetzt wird, das OCDS-Modul uneingeschränkt nutzen zu können. Für alle anderen Personen ist die Benutzung des OCDS-Moduls nur in einem keine Zugriffe auf sicherheitsrelevante Daten oder Programme gestattenden Umfang möglich.

Dabei kann vorgesehen werden, daß eine das OCDS-Modul (nach dem Berechtigungsnachweis) uneingeschränkt nutzen könnende Einrichtung in der Lage ist, die programmgesteuerte Einheit zu einem Rücksetzen zu veranlassen, nach welchem - ohne Beschränkung der momentanen Zugriffsberechtigung auf das OCDS-Modul - ausnahmsweise kein erneuter Berechtigungsnachweis seitens der betreffenden Einrichtung erforderlich ist. Dann können trotz des in der programmgesteuerten Einheit eingebauten Sicherheitsmechanismus auch die nach einem Rücksetzen der programmgesteuerten Einheit ablaufenden Vorgänge von Anfang an uneingeschränkt und lückenlos überwacht werden.

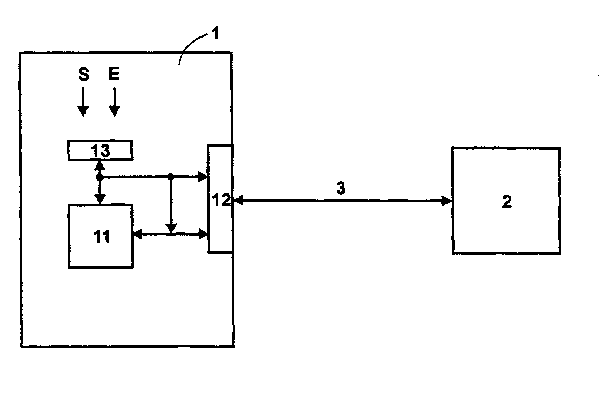

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Zeichnung näher erläutert.

Die Figur zeigt schematisch den Aufbau der nachfolgend näher beschriebenen Anordnung zum Debuggen einer programmgesteuerten Einheit mittels eines externen Debuggers.

Die zu debuggende programmgesteuerte Einheit ist im betrachteten Beispiel ein Mikrocontroller. Es könnte sich aber ebenso um eine beliebige andere programmgesteuerte Einheit wie beispielsweise einen Mikroprozessor handeln.

Die programmgesteuerte Einheit ist in der Figur mit dem Bezugszeichen 1 bezeichnet; der die programmgesteuerte Einheit 1 debuggende externe Debugger ist mit dem Bezugszeichen 2 bezeichnet.

Die programmgesteuerte Einheit 1 enthält unter anderem ein OCDS-Modul 11, eine Debug-Schnittstelle 12, und eine Zugriffsberechtigungs-Kontrolleinrichtung 13.

Die programmgesteuerte Einheit 1 und der Debugger 2 sind über eine aus einer oder mehreren Leitungen bestehende Verbindung 3 verbunden.

Diese Verbindung 3 mündet auf der Seite der programmgesteuerten Einheit 1 in die Debug-Schnittstelle 12, welche ihrerseits Verbindungen zum OCDS-Modul 11 und zur Zugriffsberechtigungs-Kontrolleinrichtung 13 aufweist.

Die Debug-Schnittstelle 12 ist beispielsweise das sogenannte JTAG-Interface. Das JTAG-Interface und dessen Verwendung als Debug-Schnittstelle ist bekannt und bedarf keiner näheren Erläuterung.

Das OCDS-Modul (On-Chip-Debug-Support-Modul) 11 ist eine den Debugger 2 unterstützende Einrichtung. Es ermöglicht es, daß der Debugger 2 während des "normalen" Betriebes der programmgesteuerten Einheit 1 in mannigfaltiger Weise auf diese zugreifen und Einfluß nehmen kann; insbesondere ist es dadurch möglich, daß die programmgesteuerte Einheit beim Erreichen vorgebbarer Break-Bedingungen automatisch angehalten wird und/oder daß gezielte Lese- und/oder Schreibzugriffe auf die internen und externen Register, Speicher und/oder andere Komponenten der programmgesteuerten Einheit und/oder des diese enthaltenden Systems durchgeführt werden.

Die bereits erwähnte Zugriffsberechtigungs-Kontrolleinrichtung 13 kontrolliert, ob und inwieweit der Debugger 2 befugt ist, über das OCDS-Modul lesend und schreibend auf die internen und/oder externen Register, Speicher und/oder sonstige über das OCDS-Modul ansprechbaren Komponenten der programmgesteuerten Einheit oder des diese enthaltenden Systems zuzugreifen; sie (die Zugriffsberechtigungs-Kontrolleinrichtung 13) sorgt dafür, daß dem OCDS-Modul 11 abverlangte Lese- und Schreibzugriffe auf die internen und/oder externen Register, Speicher und/oder sonstige über das OCDS-Modul ansprechbaren Komponenten nur ausgeführt werden, wenn die die betreffenden Zugriffe anfordernde Einrichtung (also beispielsweise der Debugger 2) die Berechtigung hierfür nachgewiesen hat.

Die Zugriffsberechtigungs-Kontrolleinrichtung 13 arbeitet im betrachteten Beispiel in Abhängigkeit von einem Sperrsignal S, welches - abgesehen von später noch genauer beschriebenen Ausnahmefällen - automatisch nach jedem Rücksetzen der programmgesteuerten Einheit gesetzt wird. Wenn und so lange dieses Sperrsignal S gesetzt ist, unterbindet die Zugriffsberechtigungs-Kontrolleinrichtung 13 die Ausführung von dem OCDS-Modul 11 abverlangten Lese- und Schreibzugriffen auf die internen und/oder externen Register, Speicher und/oder sonstige über das OCDS-Modul ansprechbaren Komponenten der programmgesteuerten Einheit oder des diese enthaltenden Systems.

Das Unterbinden der geschützten Lese- und Schreibzugriffe kann durch Einflußnahme der Zugriffsberechtigungs-Kontrolleinrichtung 13 auf das die Zugriffe ausführende OCDS-Modul 11 selbst und/oder auf die Debug-Schnittstelle 12 und/oder auf die Verbindung zwischen dem OCDS-Modul 11 und der Debug-Schnittstelle 12 erfolgen.

Das standardmäßig gesetzte Sperrsignal S wird zurücksetzt, wenn seitens des Debuggers 2 oder einer statt diesem an die programmgesteuerte Einheit angeschlossenen Einrichtung nachgewiesen wird, daß die betreffende Einrichtung zur Anforderung von Lese- und Schreibzugriffen auf interne und/oder externe Register, Speicher und/oder sonstige über das OCDS-Modul ansprechbare Komponenten berechtigt ist.

Der Nachweis dieser Berechtigung kann beispielsweise durch die Übertragung vorbestimmter Daten oder einer vorbestimmten Datenfolge von der die geschützten Lese- oder Schreibzugriffe benötigenden Einrichtung an die programmgesteuerte Einrichtung erfolgen.

Wenn und so lange das Sperrsignal S zurückgesetzt ist, werden seitens des Debuggers 2 oder einer statt dessen an die programmgesteuerte Einheit angeschlossenen Einrichtung angeforderte Lese- und Schreibzugriffe auf interne und/oder externe Register, Speicher und/oder sonstige über das OCDS-Modul ansprechbare Komponenten durch das OCDS-Modul ausgeführt.

Das Sperrsignal S und dessen Auswertung durch die Zugriffsberechtigungs-Kontrolleinrichtung 13 ermöglichen es mithin, daß Lese- und Schreibzugriffe auf interne und/oder externe Register, Speicher und/oder sonstige über das OCDS-Modul ansprechbare Komponenten der programmgesteuerten Einheit oder des diese enthaltenden Systems nur von Personen vornehmbar ist, die in Besitz eines Debuggers oder sonstigen Gerätes sind, durch welchen bzw. welches ein Berechtigungsnachweis erbracht werden kann.

Wie im einzelnen vorgegangen werden muß, um diese Berechtigung nachzuweisen, weiß nur der Hersteller der programmgesteuerten Einheit und/oder der Hersteller des die betreffende programmgesteuerte Einheit enthaltenden Systems. Damit ist es möglich, daß nur wenigen ausgewählten Personen die Möglichkeit zu einem uneingeschränkten Zugriff auf die programmgesteuerte Einheit gegeben wird; alle anderen Personen müssen sich mit einem eingeschränkten Leistungsumfang des OCDS-Moduls zufrieden geben.

Bei alledem möge beachtet werden, daß ein nur eingeschränkt nutzbares OCDS-Modul bei weitem nicht unbrauchbar ist; es ist auch bei eingeschränktem Funktionsumfang ein wertvolles Hilfsmittel zum Debuggen der betreffenden programmgesteuerten Einheit: so können beispielsweise nach wie vor Break-Bedingungen vorgegeben und deren Eintreten überwacht werden sowie für die programmgesteuerte Einheit bestimmte Daten zur Abholung oder Übernahme bereitgestellt und/oder von der programmgesteuerte Einheit zur Abholung bereitgestellte (nicht sicherheitskritische) Daten von dieser abgeholt werden.

Daß nicht jeder Debugger über das OCDS-Modul uneingeschränkt auf die programmgesteuerte Einheit zugreifen kann, wird - wie vorstehend bereits erwähnt wurde - durch Setzen des Sperrsignals S nach dem Rücksetzen der programmgesteuerten Einheit bewirkt.

Im betrachteten Beispiel wird das Sperrsignal S nicht unter allen Umständen nach dem Rücksetzen der programmgesteuerten Einheit gesetzt; es gibt eine Ausnahme, bei der dies nicht der Fall ist.

Der Ausnahmetatbestand liegt vor, wenn ein Entsicherungssignal E gesetzt ist. Dieses Entsicherungssignal kann durch die programmgesteuerte Einheit 1 oder den Debugger 2 oder eine statt dessen an die programmgesteuerte Einheit angeschlossene Einrichtung gesetzt werden, wenn der Debugger 2 oder die statt dessen an die programmgesteuerte Einheit angeschlossene Einrichtung zuvor ihre Berechtigung zur uneingeschränkten Nutzung des OCDS-Moduls nachgewiesen haben.

Das Entsicherungssignal E kann nur durch den Debugger 2 oder eine statt dessen an die programmgesteuerte Einheit angeschlossene Einrichtung zurückgesetzt werden; es wird nicht einmal beim Rücksetzen der programmgesteuerten Einheit infolge interner und/oder externer Ereignisse und/oder Befehle zurückgesetzt.

Das Setzen des Entsicherungssignals E durch den Debugger 2 hat daher zur Folge, daß das zurückgesetzte Sperrsignal S nach einem Rücksetzen der programmgesteuerten Einheit 1 nicht gesetzt wird. In diesem Fall muß der Debugger 2 nach dem Rücksetzen der programmgesteuerten Einheit 1 nicht erneut seine Berechtigung zur Anforderung von Lese- und Schreibzugriffen auf interne und/oder externe Register, Speicher und/oder sonstige über das OCDS-Modul ansprechbare Komponenten der programmgesteuerten Einheit oder des diese enthaltenden Systems nachweisen. Er wird dadurch in die Lage versetzt, die nach einem Rücksetzen der programmgesteuerten Einheit ablaufenden Vorgänge von Anfang an uneingeschränkt und lückenlos zu verfolgen.

Bei den vorstehenden Ausführungen ging es jeweils um die Unterbindung von bestimmten Lese- und Schreibzugriffen durch das OCDS-Modul. Gegenstand von Beschränkungen können zusätzlich oder alternativ auch beliebige andere Funktionen des OCDS-Moduls sein. Dabei können für verschiedene Funktionen des OCDS-Moduls auch verschiedene Berechtigungsnachweise gefordert werden.

Die beschriebene Vorrichtung und das beschriebene Verfahren ermöglichen es auf verblüffend einfache Weise, daß bei uneingeschränktem Leistungsumfang des OCDS-Moduls die Gefahr eines Mißbrauchs desselben auf ein Minimum reduziert werden kann.

## Patentansprüche

1. Programmgesteuerte Einheit (1) mit einem sogenannten On-Chip-Debug-Support-Module, OCDS-Modul (11),
**gekennzeichnet durch**
eine Zugriffsberechtigungs-Kontrolleinrichtung (13), **durch** welche dafür gesorgt wird, daß dem OCDS-Modul abverlangte Lese- und Schreibzugriffe auf interne und/oder externe Register, Speicher und/oder sonstige über das OCDS-Modul ansprechbare Komponenten nur ausgeführt werden, wenn die die betreffenden Zugriffe verlangende Einrichtung (2) die Berechtigung hierfür nachgewiesen hat.

2. Programmgesteuerte Einheit nach Anspruch 1,
**dadurch gekennzeichnet,**
**daß** die Ausführung von dem OCDS-Modul (11) abverlangten Leseund Schreibzugriffen auf interne und/oder externe Register, Speicher und/oder sonstige über das OCDS-Modul ansprechbare Komponenten unterbunden wird, wenn und so lange ein Sperrsignal (S) gesetzt ist.

3. Programmgesteuerte Einheit nach Anspruch 2,
**dadurch gekennzeichnet,**
**daß** das Sperrsignal (S) automatisch nach dem Rücksetzen der programmgesteuerten Einheit (1) gesetzt wird.

4. Programmgesteuerte Einheit nach Anspruch 2 oder 3,
**dadurch gekennzeichnet,**
**daß** das Sperrsignal (S) durch einen Nachweis der Berechtigung zur Anforderung von Lese- und Schreibzugriffen auf interne und/oder externe Register, Speicher und/oder sonstige über das OCDS-Modul (11) ansprechbare Komponenten zurückgesetzt wird.

5. Programmgesteuerte Einheit nach Anspruch 3,
**dadurch gekennzeichnet,**
**daß** das Sperrsignal (S) nach dem Rücksetzen der programmgesteuerten Einheit (1) ausnahmsweise nicht gesetzt wird, wenn ein Entsicherungssignal (E) gesetzt ist.

6. Programmgesteuerte Einheit nach Anspruch 5,
**dadurch gekennzeichnet,**
**daß** das Entsicherungssignal (E) durch ein Rücksetzen der programmgesteuerten Einheit (1) nicht zurückgesetzt wird.

7. Programmgesteuerte Einheit nach Anspruch 5 oder 6,
**dadurch gekennzeichnet,**
**daß** das Entsicherungssignal (E) ausschließlich setzbar ist, wenn an die programmgesteuerte Einheit (1) eine Einrichtung (2) angeschlossen ist, die zur Anforderung von Lese- und Schreibzugriffen auf interne und/oder externe Register, Speicher und/oder sonstige über das OCDS-Modul (11) ansprechbare Komponenten berechtigt ist und diese Berechtigung nachgewiesen hat.

8. Programmgesteuerte Einheit nach einem der vorhergehenden Ansprüche,
**dadurch gekennzeichnet,**
**daß** der Nachweis der Berechtigung zur Anforderung von Leseund Schreibzugriffen auf interne und/oder externe Register, Speicher und/oder sonstige über das OCDS-Modul (11) ansprechbare Komponenten durch die Übertragung vorbestimmter Daten oder einer vorbestimmten Datenfolge von der anfordernden Einrichtung (2) zur programmgesteuerten Einheit (1) erfolgt.

## Claims

1. Program-controlled unit (1) having what is known as an on-chip debug support module, an OCDS module (11),
**characterized by** an access-authorization supervision device (13) that ensures that read and write accesses requested of the OCDS module to internal and/or external registers, memories and/or other components addressable via the OCDS module are only performed if the device (2) requesting the accesses in question has provided proof of the authorization to do so.

2. Program-controlled unit according to claim 1,
**characterized in that**
execution of the read and write accesses requested of the OCDS module (11) to internal and/or external registers, memories and/or other components addressable via the OCDS module is inhibited if, and as long as, an inhibiting signal (S) is set.

3. Program-controlled unit according to claim 2,
**characterized in that**
the inhibiting signal (S) is set automatically after the program-controlled unit (1) is reset.

4. Program-controlled unit according to claim 2 or 3,
**characterized in that**
the inhibiting signal (S) is reset by proof of the authorization to request read and write accesses to internal and/or external registers, memories and/or other components addressable via the OCDS module (11).

5. Program-controlled unit according to claim 3,
**characterized in that**,
as an exception, the inhibiting signal (S) is not set after the program-controlled unit (1) is reset if a release signal (E) is set.

6. Program-controlled unit according to claim 5,
**characterized in that**
the release signal (E) is not reset by a reset of the program-controlled unit (1).

7. Program-controlled unit according to claim 5 or 6,
**characterized in that**
the release signal (E) can only be set if a device (2) is connected to the program-controlled unit (1), which device is authorized to request read and write accesses to internal and/or external registers, memories and/or other components addressable via the OCDS module (11), and has provided proof of this authorization.

8. Program-controlled unit according to one of the preceding claims,
**characterized in that**
proof of authorization for requesting read and write accesses to internal and/or external registers, memories and/or other components addressable via the OCDS module (11) is provided by transferring to the program-controlled unit (1) defined data or a defined data sequence from the device (2) making the request.

## Revendications

1. Unité programmable (1) comprenant un module dit embarqué d'assistance au débogage (module OCDS) (11), **caractérisée par** un dispositif de contrôle d'autorisation d'accès (13) qui veille à ce que les autorisations d'accès en lecture et en écriture aux registres, mémoires et/ou autres composants internes et/ou externes pouvant être sollicités par le module OCDS qui sont demandées au module OCDS ne soient exécutées que si le dispositif (2) qui sollicite les accès concernés a prouvé qu'il possède l'autorisation nécessaire à cet effet.

2. Unité programmable selon la revendication 1, **caractérisée en ce que** l'exécution des accès en lecture et en écriture aux registres, mémoires et/ou autres composants internes et/ou externes pouvant être sollicités par le module OCDS demandée par le module OCDS (11) est interdite si un signal de blocage (S) est appliqué et tant qu'il l'est.

3. Unité programmable selon la revendication 2, **caractérisée en ce que** le signal de blocage (S) est appliqué automatiquement après la réinitialisation de l'unité programmable (1).

4. Unité programmable selon la revendication 2 ou 3, **caractérisée en ce que** le signal de blocage (S) est supprimé par une preuve d'autorisation pour une demande d'accès en lecture et en écriture aux registres, mémoires et/ou autres composants internes et/ou externes pouvant être sollicités par le module OCDS (11).

5. Unité programmable selon la revendication 3, **caractérisée en ce que** le signal de blocage (S) n'est exceptionnellement pas appliqué après la réinitialisation de l'unité programmable (1) si un signal de déverrouillage (E) est appliqué.

6. Unité programmable selon la revendication 5, **caractérisée en ce que** le signal de déverrouillage (E) n'est pas supprimé par une réinitialisation de l'unité programmable (1).

7. Unité programmable selon la revendication 5 ou 6, **caractérisée en ce que** le signal de déverrouillage (E) peut uniquement être appliqué si un dispositif (2) est raccordé à l'unité programmable (1) qui est autorisé à demander des accès en lecture et en écriture aux registres, mémoires et/ou autres composants internes et/ou externes pouvant être sollicités par le module OCDS (11) et s'il a prouvé cette autorisation.

8. Unité programmable selon l'une des revendications précédentes, **caractérisée en ce que** la preuve de l'autorisation de demande d'accès en lecture et en écriture aux registres, mémoires et/ou autres composants internes et/ou externes pouvant être sollicités par le module OCDS (11) est apportée par la transmission de données prédéfinie ou d'une séquence de données prédéfinie du dispositif (2) demandeur vers l'unité programmable (1).
